# EUROPÄISCHE PATENTANMELDUNG

(11) **EP 0 971 523 A1**
(43) Veröffentlichungstag der Anmeldung: **12.01.2000**
(21) Anmeldenummer: 99110725.1
(22) Anmeldetag: 04.06.1999
(51) Int. Cl.: H04M 3/493

(54) **Verfahren zur Übermittlung der Rufnummer durch Auskunftsdienste**

(30) Priorität: 09.07.1998 DE 19832631
(71) Anmelder: Deutsche Telekom AG, 53113 Bonn (DE)
(72) Erfinder: Loos, Jürgen, 48599 Gronau (DE)

(57) **Zusammenfassung**

Derzeitige telefonische Auskunftdienste geben die gesuchte Rufnummer an den Kunden ausschließlich als akustische Information aus. Leistungsmerkmale moderner Endgeräte wie Anzeige der Rufnummer, Speicherung und automatische Anwahl können dabei nicht genutzt werden.

Die Übertragung der gesuchten Rufnummer als Datenpaket macht es möglich, daß der Kunde Leistungsmerkmale der modernen Telefonie anwenden kann. Dabei wird vom Auskunftsdienst der gesuchte Teilnehmer simuliert, um das Merkmal - Übermittlung der Rufnummer des Anrufers zum Angerufenen - für die gesuchte Rufnummer zu realisieren.

Die Anwendung der Datenübertragung für telefonische Auskunftsdienste bringt gegenüber der akustischen Ansage der gesuchten Rufnummer für den Kunden den Vorteil, daß Hör- und Mitschreibefehler ausgeschlosssen werden und, soweit auch die automatische Anwahl genutzt wird, ein Verwählen vermieden wird.

## Beschreibung

Die Erfindung betrifft telefonische Auskunftsdienste. Das sind Dienstleister, die Anfragen von Kunden nach der Rufnummer eines Telekommunikationsteilnehmers beantworten.

Nach dem Stand der Technik ruft ein Kunde bei einem Auskunftsdienstleister an und fragt nach der Rufnummer eines Telekommunikationsteilnehmers. Die Auskunft sucht die Rufnummer anhand bestimmter vom Kunden gelieferter Merkmale aus einem Verzeichnis heraus. Danach wird die gesuchte Rufnummer dem Anrufer angesagt.

Der Kunde notiert sich die Nummer, beendet die Verbindung zur Auskunft und baut danach anhand der mitgeteilten Rufnummer manuell die Verbindung zum gesuchten Teilnehmer auf. Hierbei muß er alle genannten Ziffern eingeben.

Der Erfindung liegt die Aufgabe zugrunde, daß die vom Auskunftsdienst ermittelte Rufnummer zum Kunden in der Form übertragen wird, daß für den Kunden eine Vereinfachung in der Anwendung erreicht wird und Fehler bei der Übermittlung und Anwahl der Rufnummer ausgeschlossen werden.

Die Aufgabe wird wie folgt gelöst:

Ein Kunde ruft bei einem Auskunftsdienstleister an und fragt nach der Rufnummer eines Telekommunikationsteilnehmers. Die Auskunft sucht die Rufnummer anhand bestimmter vom Kunden gelieferter Merkmale aus einem Verzeichnis heraus. Die gesuchte Rufnummer könnte dem Kunden jetzt angesagt werden.

Die Auskunftskraft bietet dem Kunden die elektronische Übermittlung der gesuchten Rufnummer als Datenpaket an. Bestätigt der Kunde, daß er über ein Endgerät mit Displayanzeige verfügt und daß für das Leistungsmerkmal "CLIP" (Calling Line Identification Presentation) die Berechtigung vorliegt, kann eine Datenübertragung vereinbart werden.

Der Kunde nennt dafür der Auskunftskraft seine Rufnummer bzw. wird die im Display angezeigte Rufnummer des Kunden in der Anrufliste der Auskunft hinterlegt, wenn die Auskunft für das Leistungsmerkmal "Rufnummernanzeige" berechtigt ist..

Danach legt der Kunde den Hörer auf und beendet damit die Verbindung. Die Auskunft erkennt daran, daß nun die Datenübertragung beginnen kann.

Dazu wird die Verbindung zum Anrufer aufgebaut, wobei das Endgerät lediglich 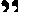 geweckt" wird. Der Angerufene braucht und soll nicht abheben. Die gesuchte Rufnummer wird nun als Datenpaket übermittelt.

Der Kunde erkennt das Eintreffen der Rufnummer am normalen Rufton und an der Anzeige im Display.

Damit der Angerufene unterscheiden kann, ob der Anruf von irgendeiner originären Rufnummer oder von der Auskunft kommt, können noch Ziffern angefügt werden, die keine vermittlungstechnische Auswirkung haben, jedoch den speziellen Auskunftsdienst identifizieren.

Die gesuchte Rufnummer wird nun in der Anrufliste des Endgerätes gespeichert. Handelsübliche Endgeräte bieten die Möglichkeit, Rufnummern aus der Anrufliste auszuwählen und den Wählprozeß automatisch ausführen zu lassen. Der Kunde nutzt das automatische Anwählen des gesuchten Teilnehmers, um ein Verwählen auszuschließen.

Für die technische Lösung sind folgende Aspekte relevant:

Der Auskunftsdienst findet die gewünschte Rufnummer als Datensatz in einem elektronischen Speicher. Für die Übertragung der Rufnummer zum Endgerät des Anrufers wird der Datensatz in ein Datenpaket umgewandelt, das identisch ist mit der gesuchten Rufnummer, in der Form, als wäre die gesuchte Rufnummer der rufende Teilnehmer (Caller-ID). Die Auskunft simuliert sozusagen für die Datenübermittlung den gesuchten Teilnehmer.

Für die Simulation einer fremden Rufnummer durch den Auskunftsdienst - ausschließlich zum Zwecke der Übermittlung als Datenpaket - ist eine Berechtigung vom Netzbetreiber erforderlich, dem die technische Realisierung der Übertragung obliegt. Der Auskunftsdienst hat die Berechtigung einzuholen.

Durch den Einsatz der modernen Vermittlungstechnik in der Telekommunikation ist es möglich, neben den reinen Gesprächsinformationen auch Daten vor, während und nach der Gesprächsführung zu senden.

Die Übertragung der Rufnummer des Anrufers zum Endgerät des Angerufenen - Leistungsmerkmal CLIP - kann auf diese Weise realisiert werden.

Bei ISDN-Anschlüssen ist dieses Leistungsmerkmal generell gegeben (siehe ETSI, ETS 300 089 von Januar 1992 sowie Frey/Schönfeld Alles über Euro-ISDN, Seite 42, Verlag Franzis 1994).

Auch bei analogen Anschlüssen kann die Übertragung und Anzeige der Rufnummer des Anrufers realisiert werden (siehe ETSI, ETS 300 778 von September 1997 sowie Funkschau 10/98, "Rufnummernanzeige am analogen Anschluß").

## Patentansprüche

1. Verfahren zur Übermittlung der Rufnummer durch Auskunftsdienste, **dadurch gekennzeichnet,** daß die von einem Kunden gesuchte Rufnummer zum Endgerät des Kunden als Datenpaket übertragen wird.

2. Verfahren nach Anspruch 1 dadurch gekennzeichnet, daß das Datenpaket in Form und Struktur einer Caller-ID - Rufnummer des Anrufers - entspricht und am Endgerät des Kunden die Leistungsmerkmale Rufnummernanzeige, Speicherung in der Anrufliste und automatische Anwahl der Rufnummer genutzt werden können.

3. Verfahren nach Anspruch 1 dadurch gekennzeichnet, daß die gesuchte Rufnummer für die Übertragung als Datenpaket mit einer Kennung versehen wird, damit der Kunde erkennt, daß der Anruf vom Auskunftsdienst kommt und die gesuchte Rufnummer übermittelt wird.
